# EUROPÄISCHE PATENTSCHRIFT

(11) **EP 0 929 932 B1**
(45) Veröffentlichungstag und Bekanntmachung des Hinweises auf die Patenterteilung: **09.04.2008**
(21) Anmeldenummer: 98945032.5
(22) Anmeldetag: 23.07.1998
(51) Int. Cl.: H02P 7/29

(54) **STEUERSCHALTUNG FÜR EINEN GLEICHSTROMMOTOR**
CONTROL CIRCUIT FOR A DC MOTOR
CIRCUIT DE COMMANDE POUR MOTEUR A COURANT CONTINU

(30) Priorität: 25.07.1997 DE 19732098
(43) Veröffentlichungstag der Anmeldung: 21.07.1999
(73) Patentinhaber: ROBERT BOSCH GMBH, 70442 Stuttgart (DE)
(72) Erfinder: MOHR, Thomas, D-77830 Bühlertal (DE); PREIS, Karl-Heinrich, D-77830 Bühlertal (DE); SCHWENK, Wolfgang, D-77704 Oberkirch-Tiergarten (DE); KERN, Robert, D-77830 Bühlertal (DE)
(86) Internationale Anmeldenummer: PCT/DE1998/002068
(87) Internationale Veröffentlichungsnummer: WO 1999/005780

(56) Entgegenhaltungen:
- EP-A- 0 350 783
- DE-C- 19 617 947
- PATENT ABSTRACTS OF JAPAN vol. 096, no. 004, 30. April 1996 & JP 07 337085 A (NIPPONDENSO CO LTD), 22. Dezember 1995

## Beschreibung

### Stand der Technik

Die Erfindung bezieht sich auf eine Steuerschaltung für einen getaktet angesteuerten Gleichstrommotor mit einem parallel geschalteten Elektrolytkondensator und Freilaufdiode.

Eine derartige Steuerschaltung wird als bekannt angenommen. Bei einer derartigen bekannten Steuerschaltung liegen in der Anschlußleitung der Motorversorgungsspannung auf der positiven und negativen Seite Induktivitäten in Form von Drosseln zur Glättung des durch die Taktung verursachten Spannungsverlaufs und zur Reduzierung der Störabstrahlung. Diese Drosseln müssen für relativ hohe Ströme und eine damit verbundene Verlustleistung ausgelegt sein, so daß sie relativ große Abmessungen haben und auch entsprechend teuer sind.

Das Dockument JP 07337085 beschreibt eine Bypass-Scheltung bestehend aus der Freilaufdiode, einem FET und einer weiteren Drossel. Die Schaltung dient zur Unterdrückung von Störsignalen.

### Vorteile der Erfindung

Der Erfindung liegt die Aufgabe zugrunde, eine Steuerschaltung der eingangs genannten Art bereitzustellen, bei der die Störabstrahlung mit günstigeren schaltungstechnischen Maßnahmen wirkungsvoll reduzierbar ist.

Diese Aufgabe wird mit den Merkmalen der Ansprüche 1 und 2 gelöst.

Zum einen ist hiernach also vorgesehen, daß zwischen der positiven Motorversorgungsspannung und dem Plus-Anschluß des Elektrolytkondensators eine Drossel angeschlossen ist und daß die Freilaufdiode mit ihrer Kathode zwischen der Drossel und dem Elektrolytkondensator und mit ihrer Anode an der negativen Seite des Gleichstrommotors liegt.

Zum andern ist vorgesehen, daß zwischen der negativen Motorversorgungsspannung und dem Minus-Anschluß des Elektrolytkondensators eine Drossel angeschlossen ist und daß die Freilaufdiode mit ihrer Anode zwischen der Drossel und dem Elektrolytkondensator und mit ihrer Kathode an der positiven Seite des Gleichstrommotors liegt.

Diese Anordnung der Drossel in Verbindung mit der Freilaufdiode und dem Elektrolytkondensator ergibt den Vorteil, daß diese für nur relativ geringe Ströme, z. B. 6A (im Gegensatz zu herkömmlichen Drosseln von 30A) ausgelegt werden kann, wodurch wesentlich kleinere Abmaße und eine Reduzierung der Kosten erzielt werden.

Ist zusätzlich eine Verpolschutzeinrichtung vorgesehen, so ist eine Schaltungsanordnung vorteilhaft, die derart aufgebaut ist, daß zwischen die Drossel und die positive Versorgungsspannung als Verpolschutzeinrichtung ein invers betriebener n-Kanal Leistungs-Mos-Fet geschaltet ist, bzw. die bei der Alternative derart aufgebaut ist, daß zwischen die Drossel und die negative Versorgungsspannung als Verpolschutzeinrichtung ein invers betriebener n-Kanal Leistungs-Mos-Fet geschaltet ist.

Die Erfindung wird nachfolgend von Ausführungsbeispielen unter Bezugnahme auf die Zeichnungen näher erläutert.

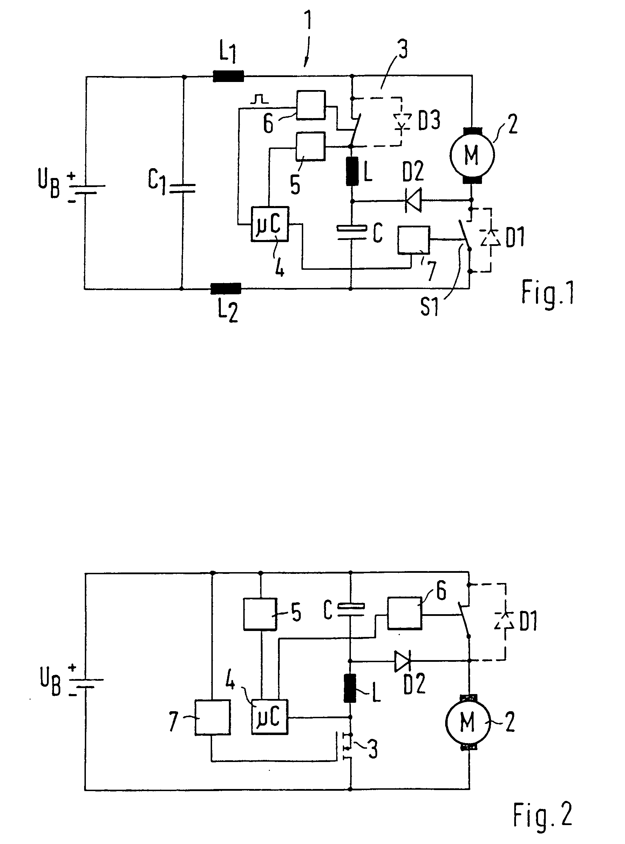

Die Figur 1 zeigt eine Steuerschaltung 1 für einen z. B. mit einer Schaltfrequenz von 20 KHz mit Pulsweitenmodulation angesteuerten Gleichstrommotor 2. Die getaktete Ansteuerung erfolgt dabei über eine Schalteinrichtung S1 in Form eines Leistungs-Mos-Fets mit einer integrierten Diode D1, die bezüglich der üblichen Polung der Versorgungs spannung bzw. Batteriespannung U_{B} in Sperrichtung liegt. An die negative Seite des Motors 2 ist eine Freilaufdiode D2 mit ihrer Anode angeschlossen.

In der Zu- und Abgangsleitung der Versorgungsspannung liegen bei vorliegender Schaltung nicht notwendige, gegenüber herkömmlichen Schaltungen wesentlich verkleinerte, Induktivitäten L₁ und L₂, die zur Glättung des durch die Taktfrequenz beeinflußten Spannungsverlaufs und zur Verringerung der Störabstrahlung dienen.

Dem Gleichstrommotor 2 ist ein Elektrolytkondensator C parallel geschaltet, der mit seinem Plus-Anschluß über eine weitere Drossel L und eine Verpolschutzeinrichtung in Form einer Schalteinheit 3 an die positive Versorgungsspannung angeschlossen ist, während der Minus-Anschluß an der negativen Spannungsversorgungsleitung liegt. Die Freilaufdiode D2 ist mit ihrer Kathode zwischen dem Elektrolytkondensator C und der weiteren Drossel L angeschlossen. Parallel zur Batteriespannungsversorgung U_{B} liegt ein weiterer Kondensator C₁, der als Folienkondensator ausgebildet ist.

Die Schalteinheit 3 ist vorzugsweise als invers betriebener n-Kanal Leistungs-Mos-Fet mit einer der Drain-Source-Strecke parallel geschalteten Diode D3 ausgebildet, die mit ihrer Anode an Plus-Potential und mit ihrer Kathode an die weitere Drossel L angeschlossen ist. An diesen Anschlußpunkt zwischen der weiteren Drossel L und der Schalteinheit 3 ist auch ein Mikrocontroller 4 über eine Versorgungsspannungsschaltung 5 angeschlossen, der mit einem weiteren Anschluß über eine Bootstrapschaltung 6 an dem positiven Anschlußpunkt der Schalteinheit 3 liegt. Der Mikrocontroller 4 dient unter anderem zur Steuerung der Schalteinrichtung S1 und damit der Ansteuerung des Gleichstrommotors 2. Bei Falschpolung der Batteriespannungsversorgung U_{B} wird mittels der Schalteinheit 3 der Strom in den Elektrolytkondensator C und durch die Freilaufdiode D2 unterbrochen und damit deren Zerstörung verhindert. Zudem wird die Spannungsversorugng des Mikrocontrollers 4 unterbrochen.

Durch die beschriebene Anordnung der Drossel L kann diese für relativ kleine Ströme, bei einem 30 -Ampere- Ventilatormotor im Kraftfahrzeug zum Beispiel für 6A, ausgelegt und damit in ihren Abmessungen sehr klein gehalten werden. Gleichzeitig können die Drosseln L₁ und L₂ wesentlich verkleinert werden oder entfallen. Damit wird auch eine erhebliche Kostenreduzierung erreicht.

Durch die weitere Drossel L fließt nur noch ein Gleichstrom, da der Wechselanteil durch die weitere Drossel L geblockt wird.

Bei einem alternativen Aufbau der Steuerschaltung 1 gemäß Fig. 2 ist die Schalteinrichtung S1 für die getaktete Ansteuerung auf der Plus-Seite des Gleichstrommotors 2 angeschlossen (High-Side-Schalter). Dabei ist die Drossel L zwischen der negativen Motorversorgungsspannung und dem Minus-Anschluß des Elektrolytkondensators C angeschlossen, und die Freilaufdiode D2 liegt mit ihrer Anode zwischen der Drossel L und dem Elektrolytkondensator C und mit ihrer Kathode an der positiven Seite des Gleichstrommotors 2. Die Verpolschutzeinrichtung 3 ist als invers bestriebener n-Kanal Leistungs-Mos-Fet zwischen die Drossel L und die negative Versorgungsspannung geschaltet.

## Patentansprüche

1. Steuerschaltung für einen getaktet angesteuerten Gleichstrommotor mit einem parallel geschalteten Elektrolytkondensator und Freilaufdiode,
**dadurch gekennzeichnet,**
**daß** zwischen der positiven Motorversorgungsspannung und dem Plus-Anschluß des Elektrolytkondensators (C) eine Drossel (L) angeschlossen ist und
**daß** die Freilaufdiode (D2) mit ihrer Kathode zwischen der Drossel (L) und dem Elektrolytkondensator (C) und mit ihrer Anode an der negativen Seite des Gleichstrommotors (2) liegt.

2. Steuerschaltung für einen getaktet angesteuerten Gleichstrommotor mit einem parallel geschalteten Elektrolytkondensator und einer Freilaufdiode,
**dadurch gekennzeichnet,**
**daß** zwischen der negativen Motorversorgungsspannung und dem Minus-Anschluß des Elektrolytkondensators (C) eine Drossel (L) angeschlossen ist und
**daß** die Freilaufdiode (D2) mit ihrer Anode zwischen der Drossel (L) und dem Elektrolytkondensator (C) und mit ihrer Kathode an der positiven Seite des Gleichstrommotors (2) liegt.

3. Steuerschaltung nach Anspruch 1,
**dadurch gekennzeichnet,**
**daß** zwischen die Drossel (L) und die positive Versorgungsspannung als Verpolschutzeinrichtung (3) ein invers betriebener n-Kanal Leistungs-Mos-Fet geschaltet ist.

4. Steuerschaltung nach Anspruch 2,
**dadurch gekennzeichnet,**
**daß** zwischen die Drossel (L) und die negative Versorgungsspannung als Verpolschutzeinrichtung (3) ein invers betriebener n-Kanal Leistungs-Mos-Fet geschaltet ist.

## Claims

1. Control circuit for a DC motor which is driven in a clocked fashion and has an electrolytic capacitor, which is connected in parallel, and a free-wheeling diode, **characterized in that** an inductor (L) is connected between the positive motor supply voltage and the positive terminal of the electrolytic capacitor (C), and **in that** the cathode of the free-wheeling diode (D2) is situated between the inductor (L) and the electrolytic capacitor (C), and the anode of the said free-wheeling diode is situated on the negative side of the DC motor (2).

2. Control circuit for a DC motor which is driven in a clocked fashion and has an electrolytic capacitor, which is connected in parallel, and a free-wheeling diode, **characterized in that** an inductor (L) is connected between the negative motor supply voltage and the negative terminal of the electrolytic capacitor (C), and **in that** the anode of the free-wheeling diode (D2) is situated between the inductor (L) and the electrolytic capacitor (C) and the cathode of the said free-wheeling diode is situated on the positive side of the DC motor (2).

3. Control circuit according to Claim 1, **characterized in that** an inversely operated n-channel power MOSFET is connected between the inductor (L) and the positive supply voltage as a polarity-reversal protection device (3).

4. Control circuit according to Claim 2, **characterized in that** an inversely operated n-channel power MOSFET is connected between the inductor (L) and the negative supply voltage as a polarity-reversal protection device (3).

## Revendications

1. Circuit de commande d'un moteur à courant continu à commande cadencée, comportant en parallèle un condensateur à électrolyte et une diode de roue libre,
**caractérisé en ce qu'**
une bobine (L) est branchée entre la tension d'alimentation positive du moteur et la borne plus du condensateur à électrolyte (C) et
la cathode de la diode de roue libre (D2) est située entre la bobine (L) et le condensateur à électrolyte (C) et son anode est reliée au côté négatif du moteur à courant continu.

2. Circuit de commande d'un moteur à courant continu à commande cadencée, comportant en parallèle un condensateur à électrolyte et une diode de roue libre,
**caractérisé en ce qu'**
une bobine (L) est branchée entre la tension d'alimentation négative du moteur et la borne moins du condensateur à électrolyte (C) et
la diode de roue libre (D2) est reliée par son anode entre la bobine (L) et le condensateur à électrolyte (C) et sa cathode est reliée au côté positif du moteur à courant continu (2).

3. Circuit de commande selon la revendication 1,
**caractérisé par**
un composant Mos-Fet de puissance, à canal n, à fonctionnement inversé est branché entre la bobine (L) et la tension d'alimentation positive comme installation de protection contre une erreur de polarité (3).

4. Circuit de commande selon la revendication 2,
**caractérisé en ce qu'**
un composant Mos-Fet de puissance à canal n, à fonctionnement inversé, est branché entre la bobine et la tension d'alimentation négative comme installation de protection contre une erreur de polarité (3).
